# EUROPÄISCHE PATENTSCHRIFT

(11) **EP 3 304 125 B1**
(45) Veröffentlichungstag und Bekanntmachung des Hinweises auf die Patenterteilung: **16.10.2019**
(21) Anmeldenummer: 16723366.7
(22) Anmeldetag: 19.05.2016
(51) Int. Cl.: G01S 17/93, G01S 7/481, G01S 17/42

(54) **HALTEVORRICHTUNG ZUM HALTEN EINER ANTRIEBSEINHEIT EINER UMLENKSPIEGELANORDNUNG, DETEKTIONSVORRICHTUNG MIT EINER UMLENKSPIEGELANORDNUNG SOWIE KRAFTFAHRZEUG**
HOLDING DEVICE FOR HOLDING A DRIVE UNIT OF A DEFLECTION MIRROR ARRANGEMENT, DETECTION DEVICE COMPRISING A DEFLECTION MIRROR ARRANGEMENT AND MOTOR VEHICLE
DIPOSITIF DE RETENUE DESTINÉ À UNE UNITÉ D'ENTRAÎNEMENT D'UN ENSEMBLE MIROIR DÉFLECTEUR, DISPOSITIF DE DÉTECTION POURVU D'UN ENSEMBLE MIROIR DÉFLECTEUR ET VÉHICULE À MOTEUR

(30) Priorität: 03.06.2015 DE 102015108762
(43) Veröffentlichungstag der Anmeldung: 11.04.2018
(73) Patentinhaber: Valeo Schalter und Sensoren GmbH, 74321 Bietigheim-Bissingen (DE)
(72) Erfinder: POPESCU, Sorin, 74321 Bietigheim-Bissingen (DE); HORVATH, Peter, 74321 Bietigheim-Bissingen (DE)
(74) Vertreter: Withopf, Kristina
(86) Internationale Anmeldenummer: PCT/EP2016/061186
(87) Internationale Veröffentlichungsnummer: WO 2016/193001

(56) Entgegenhaltungen:
- EP-A1- 2 687 865
- WO-A1-2016/096624
- DE-A1-102010 047 984

## Beschreibung

Die Erfindung betrifft eine Haltevorrichtung zum Halten einer Antriebseinheit einer Umlenkspiegelanordnung einer optischen Detektionsvorrichtung für ein Kraftfahrzeug. Die Erfindung betrifft außerdem eine optische Detektionsvorrichtung sowie ein Kraftfahrzeug.

Im vorliegenden Fall richtet sich das Interesse auf eine optische Detektionsvorrichtung für ein Kraftfahrzeug, insbesondere einen Laserscanner. Mittels der optischen Detektionsvorrichtung kann ein Umgebungsbereich des Kraftfahrzeugs überwacht werden. Dabei können Objekte in dem Umgebungsbereich des Kraftfahrzeugs erfasst werden und Informationen über das erfasste Objekt, beispielsweise ein Abstand des Objektes zu dem Kraftfahrzeug, einem Fahrerassistenzsystem bereitgestellt werden. Eine solche optische Detektionsvorrichtung in Form von einem Laserscanner ist beispielsweise aus der DE 10 2010 047 984 A1 bekannt. Dabei wird Licht, welches beispielsweise von einem Laser bereitgestellt wird, auf einen Umlenkspiegel einer Sendespiegeleinheit ausgesendet und an dem Umlenkspiegel in den Umgebungsbereich reflektiert. Das Licht wird an dem Objekt im Umgebungsbereich zurück zu einem Umlenkspiegel einer Empfangsspiegeleinheit reflektiert und daraufhin erfasst. Die Umlenkspiegel der Sendespiegeleinheit und Empfangsspiegeleinheit sind drehbar gelagert und werden mittels einer Antriebseinheit zum Drehen um eine Drehachse angetrieben. Dadurch wird das Licht an verschiedene Positionen in dem Umgebungsbereich abgelenkt und der Umgebungsbereich somit abgetastet. Laserscanner weisen üblicherweise eine hohe Empfindlichkeit auf, wodurch der Umgebungsbereich sehr genau erfasst werden kann.

Aus dieser hohen Empfindlichkeit ergibt sich jedoch der Nachteil, dass der Laserscanner auch auf Störsignale, beispielsweise Reflexionen des ausgesendeten Lichtes an anderen Gegenständen als den abzutastenden Objekten, beispielsweise an Gehäuseteilen des Laserscanners, empfindlich reagiert. Um solche sogenannten Eigenblendungen des Laserscanners zu verhindern, schlägt beispielsweise die DE 100 02 090 A1 vor, die Ablenkeinrichtungen zum Senden und Empfangen in separaten Gehäusen anzuordnen, um die Sendeeinrichtung und die Empfangseinrichtung optisch voneinander zu isolieren.

Es ist Aufgabe der vorliegenden Erfindung, eine Lösung bereitzustellen, mittels welcher auf besonders einfache und aufwandsarme Weise Störsignale einer Detektionsvorrichtung vermieden werden können.

Diese Aufgabe wird erfindungsgemäß durch eine Haltevorrichtung, eine optische Detektionsvorrichtung sowie ein Kraftfahrzeug mit den Merkmalen gemäß den unabhängigen Patentansprüchen gelöst.

Eine erfindungsgemäße Haltevorrichtung dient zum Halten einer Antriebseinheit einer Umlenkspiegelanordnung einer optischen Detektionsvorrichtung für ein Kraftfahrzeug. Die Haltevorrichtung weist ein Halteteil auf, mit dem ein Lichtschott einteilig ausgebildet ist, wobei das Lichtschott beim bestimmungsgemäßen Halten der Antriebseinheit durch die Haltevorrichtung zum zeitweiligen Unterteilen einer reflektierenden Fläche zumindest eines, an einer Drehachse drehbar gelagerten Umlenkspiegels der Umlenkspiegelanordnung in einen Sendebereich und einen Empfangsbereich bereichsweise an der reflektierenden Fläche angeordnet ist.

Die Haltevorrichtung ist eine Komponente der optischen Detektionsvorrichtung, insbesondere eines Laserscanners, welche ein von einer Lichtquelle bereitgestelltes optisches Signal, insbesondere einen von einem Laser bereitgestellten Laserstrahl, in einen Umgebungsbereich des Kraftfahrzeugs aussendet und das an einem Objekt im Umgebungsbereich reflektierte Licht wieder empfängt. Die Haltevorrichtung dient dabei zum Halten der Antriebseinheit, welche beispielsweise als ein Servomotor ausgestaltet sein kann und zum Antreiben der Drehachse ausgelegt ist, an welcher der zumindest eine Umlenkspiegel drehbar gelagert ist. Gleichzeitig ist die Haltevorrichtung durch das mit dem Halteteil der Haltevorrichtung einteilig ausgebildete Lichtschott dazu ausgelegt, die reflektierende Fläche des zumindest einen Umlenkspiegels in den Sendebereich und den Empfangsbereich zu unterteilen. Das Lichtschott ist also in die Haltevorrichtung integriert. Die Unterteilung wird dabei so realisiert, dass das Lichtschott der Haltevorrichtung an der reflektierenden Fläche des zumindest einen Umlenkspiegels angeordnet wird. Dabei bedeckt das Lichtschott die reflektierende Fläche des zumindest einen Umlenkspiegels bereichsweise.

Anders ausgedrückt, werden der Sendebereich und der Empfangsbereich also nicht als separate Spiegelteile ausgebildet, sondern erst nach Anordnen des Lichtschottes an der durchgängigen, geschlossenen reflektierenden Fläche des zumindest einen Umlenkspiegels gebildet. Das Lichtschott ist dabei von der reflektierenden Fläche wieder zerstörungsfrei lösbar. Mit anderen Worten bedeutet dies, dass nach Lösen des Lichtschottes von der reflektierenden Fläche die Unterteilung der reflektierenden Fläche in den Sendebereich und den Empfangsbereich wieder aufgehoben ist, also dass nach Lösen wieder eine durchgängige, geschlossenen reflektierende Fläche ohne den Sendebereich und den Empfangsbereich bereitgestellt ist. Die Haltevorrichtung mit dem Halteteil und dem Lichtschott ist dabei ortsfest bezüglich des zumindest einen drehbar gelagerten Umlenkspiegels. Dies bedeutet, dass sich durch das Drehen des Umlenkspiegels die reflektierende Fläche des Umlenkspiegels von dem ortsfesten Lichtschott entfernt, insbesondere unter dem Lichtschott wegdreht. Dadurch ist die reflektierende Fläche des zumindest einen Umlenkspiegels also nur zeitweise beziehungsweise temporär in den Sendebereich und den Empfangsbereich unterteilt. Die Unterteilung der reflektierenden Fläche in den Sendebereich und den Empfangsbereich ist also nur dann gegeben, wenn die reflektierende Fläche des zumindest einen Umlenkspiegels in einer aktuellen Lage beziehungsweise Rotationsposition mit dem Lichtschott überlappt und dadurch das Lichtschott an der reflektierenden Fläche angeordnet ist. Somit ist die Haltevorrichtung besonders multifunktional ausgestaltet. Dadurch kann auf besonders einfache Weise der zumindest eine Umlenkspiegel in den Sendebereich und den Empfangsbereich unterteilt werden.

Durch die einteilige Ausgestaltung des Halteteils mit dem Lichtschott ergibt sich außerdem der Vorteil, dass zwischen dem Halteteil und dem Lichtschott beispielsweise keine Lichtspalte entstehen, durch welche ein Streulicht und damit ein Störsignal verursacht wird. Dadurch wird ein verbesserter Signal-Rausch-Abstand der Detektionsvorrichtung erreicht, was zu einer Reichweiteerhöhung der Detektionsvorrichtung führt. Außerdem können durch die Reduzierung der Anzahl der Bauteile und der Montageschritte Kosten für die Herstellung der optischen Detektionsvorrichtung reduziert werden.

Besonders bevorzugt weist das Lichtschott ein Öffnungsfenster auf, durch welches beim Anordnen des Lichtschottes an der reflektierenden Fläche ein Bereich der reflektierenden Fläche freigelegt wird beziehungsweise optisch zugänglich gemacht wird, wobei der Sendebereich durch den durch das Öffnungsfenster freigelegten Bereich ausgebildet ist und der Empfangsbereich als ein an das Lichtschott angrenzender Bereich der reflektierenden Fläche ausgebildet ist. Das Öffnungsfenster kann beispielsweise in dem Halteteil als eine durchgängige Aussparung ausgebildet sein. Das Lichtschott ist dabei derart an der reflektierenden Fläche angeordnet, dass das Öffnungsfenster mit der reflektierenden Fläche überlappt. In Blickrichtung senkrecht zu der reflektierenden Fläche auf die reflektierende Fläche ist durch das Öffnungsfenster hindurch der freigelegte Bereich der reflektierenden Fläche sichtbar, welcher als der Sendebereich definiert wird.

Während des Drehens des Umlenkspiegels verändert sich eine Fläche des Überlappungsbereiches und damit des Sendebereiches.

Das Lichtschott fungiert also als eine Blende mit einer festen Blendenöffnung in Form von dem Öffnungsfenster. Das von der Lichtquelle bereitgestellte optische Signal wird also durch die Blendenöffnung, also durch das Öffnungsfenster hindurch, auf den Sendebereich der reflektierenden Fläche des zumindest einen Umlenkspiegels gesendet und von der reflektierenden Fläche des Sendebereiches aus zurück durch die Blendenöffnung in den Umgebungsbereich reflektiert. Der an das Lichtschott angrenzende Bereich, also ein Bereich außerhalb des Öffnungsfensters sowie ein durch Komponenten des Lichtschottes, beispielsweise eine Umrandung des Öffnungsfensters, unbedeckter Bereich der reflektierenden Fläche, wird somit als der Empfangsbereich definiert. Durch das Bereitstellen des Öffnungsfensters, beispielsweise in dem Halteteil, kann das Lichtschott besonders einfach und unaufwändig gefertigt werden.

Vorzugsweise ist das Öffnungsfenster mit einer Breite ausgebildet, welche zumindest einer Breite der reflektierenden Fläche entspricht. Das Lichtschott ist also zum horizontalen Unterteilen der reflektierenden Fläche in den Sendebereich und den Empfangsbereich entlang einer in vertikale Richtung orientierten Drehachse der Umlenkspiegelanordnung ausgebildet. Durch das Lichtschott wird also die reflektierende Fläche des zumindest einen Umlenkspiegels in zwei horizontal aneinander angrenzende Bereiche unterteilt. Entlang der Drehachse sind die Antriebseinheit und der zumindest eine drehbar gelagerte Umlenkspiegel übereinander angeordnet. Insbesondere ist das Lichtschott im Bereich einer an die Antriebseinheit angrenzenden, der Antriebseinheit benachbarten Breitenkante des zumindest einen Umlenkspiegels angeordnet. Dadurch ist der Sendebereich benachbart zu der Antriebseinheit angeordnet. Bei einer Betrachtung der Detektionsvorrichtung, bei welcher die Detektionsvorrichtung derart ausgerichtet ist, dass die Antriebseinheit entlang der vertikale verlaufenden Drehachse über dem zumindest einen Umlenkspiegel angeordnet ist, ist der Sendebereich dabei der obere Bereich auf der reflektierenden Fläche und der Empfangsbereich der unterhalb des Sendebereiches liegende untere Bereich auf der reflektierenden Fläche.

Vorzugsweise ist das Öffnungsfenster entlang der Drehachse mit einer Höhe ausgebildet, welche kleiner als eine halbe Höhe der reflektierenden Fläche ist. Das Lichtschott ist also zum Unterteilen der reflektierenden Fläche in einen gegenüber dem Sendebereich größeren Empfangsbereich ausgebildet. Entlang der Drehachse weist also der Sendebereich eine geringere Höhe beziehungsweise einen geringere vertikale Öffnung auf als der Empfangsbereich. Das Öffnungsfenster kann beispielsweise als ein schmaler Streifen in dem Halteteil über eine Breite der reflektierenden Fläche ausgebildet sein. Der Empfangsbereich wird also mit einer besonders großen Fläche ausgebildet, wodurch die Detektionsvorrichtung mittels der Haltevorrichtung mit einer besonders hohen Empfindlichkeit ausgebildet wird.

Es kann vorgesehen sein, dass das Lichtschott eine Aufnahmeeinrichtung zum Aufnehmen einer Lichtquelle und zum Leiten des von der Lichtquelle bereitgestellten Lichtes auf den Sendebereich der reflektierenden Fläche aufweist. Die Aufnahmeeinrichtung dient dabei zum Halten der Lichtquelle, insbesondere des Lasers, in einer definierten Lage. Damit kann der von dem Laser ausgesendete Laserstrahl besonders sicher und zuverlässig von dem Laser über die Aufnahmeinrichtung durch das Öffnungsfenster hindurch auf den Sendebereich geleitet werden.

Bevorzugt weist die Aufnahmeeinrichtung zwei parallel zueinander verlaufende, kalottenartige, einen Aufnahmeschacht bildende Wände auf, welche an einer zu der Drehachse parallel verlaufenden Seitenwand der Haltevorrichtung senkrecht zu der Seitenwand orientiert angeordnet sind. Insbesondere sind die Wände an zwei, entlang einer Breite der reflektierenden Fläche verlaufenden Langseiten des Öffnungsfensters angrenzend angeordnet. Die Wände sind dabei senkrecht zu der Seitenwand und damit senkrecht zu der Drehachse der Haltevorrichtung angeordnet. Die Wände bilden dabei einen Schacht, welcher einerseits die Lichtquelle hält und andererseits das Licht entlang des Schachtes zu dem Öffnungsfenster leitet. Durch die senkrecht an die horizontal verlaufenden Langseiten des Öffnungsfensters angrenzenden Wände wird außerdem eine besonders deutliche Grenze zwischen dem Sendebereich und dem Empfangsbereich auf der reflektierenden Fläche ausgebildet. Die eine Wand begrenzt nämlich den Sendebereich entlang der Drehachse nach unten hin und die die andere, parallel angeordnete Wand begrenzt den Sendebereich entlang der Drehachse nach oben hin. Durch die Aufnahmeeinrichtung wird also auch der Sendebereich optisch besonders gut von dem Empfangsbereich isoliert beziehungsweise separiert. Damit kann beispielsweise gewährleistet werden, dass das von der Lichtquelle bereitgestellte optische Signal bei Aussenden nur auf den Sendebereich und nicht auf den Empfangsbereich auftrifft.

Gemäß einer Ausführungsform der Erfindung weist das Halteteil einen ersten Aufnahmebereich zum Aufnehmen der Antriebseinheit und einen zweiten Aufnahmebereich zum Aufnehmen des zumindest einen Umlenkspiegels auf, wobei die Drehachse innerhalb des ersten und des zweiten Aufnahmebereiches angeordnet ist und der erste und der zweite Aufnahmebereich entlang der Drehachse angrenzend aneinander ausgebildet sind. Der erste Aufnahmebereich und der zweite Aufnahmebereich sind also fluchtend zueinander angeordnet, wobei die Antriebseinheit entlang Drehachse in vertikaler Richtung betrachtet über dem zumindest einen Umlenkspiegel angeordnet ist. Die Umlenkspiegelanordnung kann beispielsweise eine Trägerplatte aufweisen, an welcher zwei Umlenkspiegel gegenüberliegend und parallel zueinander angeordnet sind und welche mit der Drehachse zum Rotieren der Umlenkspiegel verbunden ist. Die Trägerplatte mit den Umlenkspiegeln wird dabei beim Halten der Antriebseinheit von dem zweiten Aufnahmeteil aufgenommen.

Vorzugsweise sind das erste und das zweite Aufnahmeteil hohlzylinderförmig ausgebildet, wobei eine Seitenwand des ersten Aufnahmeteils um die Drehachse verlaufend und an das Lichtschott direkt angrenzend ausgebildet ist und eine Seitenwand des zweiten Aufnahmeteils entlang der Drehachse einen ersten, um die Drehachse verlaufenden und direkt an das Lichtschott angrenzenden Bereich und einen zweiten aufgebrochen, teilweise um die Drehachse verlaufenden Bereich zum Überdecken der reflektierenden Fläche des zumindest einen Umlenkspiegels aufweist. Die hohlzylinderförmigen Aufnahmeteile sind also fluchtend zueinander angeordnet, wobei das erste Aufnahmeteil vorzugsweise einen kleineren Innenradius aufweist als der zweite Aufnahmeteil. Die Drehachse verläuft dabei insbesondere mittig durch die hohlzylinderförmigen Aufnahmeteile. Über das erste Aufnahmeteil kann die Antriebseinheit aufgenommen werden und beispielsweise an der Seitenwand des ersten Aufnahmeteils zum Halten befestigt werden. Geschlossen an das hohlzylinderförmige erste Aufnahmeteil angrenzend ist das zweite hohlzylinderförmige Aufnahmeteil ausgebildet. Dabei ist im ersten Bereich die Seitenwand des zweiten Aufnahmeteils um die Drehachse verlaufend und an das Lichtschott unmittelbar angrenzend ausgebildet. Im zweiten Bereich weist die Seitenwand des zweiten Aufnahmeteils eine entlang der Drehachse verlaufende Aussparung auf. Durch die Aussparung ist die Seitenwand im zweiten Bereich aufgebrochen. Die Seitenwand ist dabei im zweiten Bereich des zweiten Aufnahmeteils entlang der Drehachse mit den Umlenkspiegeln vollständig überlappend und entlang der Umlaufrichtung mit den Umlenkspiegeln bereichsweise überlappend ausgebildet. Beim Halten der Antriebseinheit ummantelt die teilweise umlaufende Seitenwand die Umlenkspiegel also entlang der Umlaufrichtung bereichsweise.

Dabei kann es vorgesehen sein, dass das Lichtschott an einer ersten Seite des ersten Aufnahmeteils und des ersten Bereiches des zweiten Aufnahmeteils ausgebildet ist und der teilweise umlaufende Bereich der Seitenwand an einer, der ersten Seite gegenüberliegenden, zweiten Seite des ersten Aufnahmeteils und des ersten Bereiches des zweiten Aufnahmeteils ausgebildet ist. Bei zwei, beispielsweise an einer Trägerplatte befestigten, gegenüberliegenden Umlenkspiegeln bedeutet dies, dass die reflektierende Fläche eines der Umlenkspiegel durch das Lichtschott in den Sendebereich und den Empfangsbereich unterteilt wird und die reflektierende Fläche des gegenüberliegenden Umlenkspiegels von der insbesondere halbkreisförmig um die Drehachse verlaufenden Seitenwand des zweiten Bereiches des zweiten Aufnahmeteils bedeckt ist. In einer bestimmungsgemäßen Einbaulage der Detektionsvorrichtung in Kraftfahrzeug bildet die erste Seite mit dem Lichtschott eine Frontseite der Detektionsvorrichtung aus, welche einem Umgebungsbereich des Kraftfahrzeugs zugewandt ist, und die zweite Seite mit der halbzylinderförmigen Seitenwand eine Rückseite der Detektionsvorrichtung aus, welche dem Umgebungsbereich des Kraftfahrzeugs abgewandt ist.

Es erweist sich als vorteilhaft, wenn eine Form des Lichtschottes entlang einer um die Drehachse verlaufenden Umlaufrichtung zumindest bereichsweise komplementär zu einer Form der Seitenwände des Aufnahmeteils ausgebildet ist und somit einem Verlauf der Seitenwände folgend in den Seitenwänden ausgebildet ist. So kann an dem beispielsweise hohlzylinderförmigen Aufnahmeteil, dessen Seitenwand konvex gewölbt ausgebildet ist, das Lichtschott, insbesondere die Wände der Aufnahmeeinrichtung des Lichtschottes, bereichsweise konkav gewölbt ausgebildet sein, sodass sich das Lichtschott, insbesondere die Wände der Aufnahmeeinrichtung, zumindest bereichsweise an die Seitenwände der Aufnahmeteile anschließt beziehungsweise anschmiegt. Das Lichtschott ist somit besonders platzsparend in die Haltevorrichtung integriert.

Gemäß einer Ausführungsform ist an Seitenwänden der Haltevorrichtung zumindest ein Befestigungselement zum Befestigen der Antriebseinheit und/oder des zumindest einen Umlenkspiegels und/oder der Haltevorrichtung in einem Gehäuse für die Umlenkspiegelanordnung ausgebildet. Das zumindest eine Befestigungselement kann beispielsweise als ein Gewinde und einteilig mit dem Halteteil ausgebildet sein, durch welches die Antriebseinheit und/oder der zumindest eine Umlenkspiegel und/oder die Haltevorrichtung mittels Schrauben befestigt beziehungsweise fixiert werden können.

Besonders bevorzugt ist die Haltevorrichtung aus einem Leichtmetall oder einem Kunststoff gebildet. Als das Leichtmetall kann beispielsweise Aluminium bereitgestellt werden. Eine aus Kunststoff gebildete Haltevorrichtung kann beispielsweise mittels eines Spritzgussverfahrens hergestellt werden. Eine aus Leichtmetall oder Kunststoff bestehende Haltevorrichtung weist in vorteilhafter Weise ein besonders geringes Gewicht auf.

Die Erfindung betrifft außerdem eine optische Detektionsvorrichtung, insbesondere einen Laserscanner, für ein Kraftfahrzeug mit einer Umlenkspiegelanordnung mit einer Antriebseinheit zum Antreiben zumindest eines an einer Drehachse drehbar gelagerten Umlenkspiegels der Umlenkspiegelanordnung und mit einer erfindungsgemäßen Haltevorrichtung. Die Detektionsvorrichtung dient insbesondere zum Erfassen des Umgebungsbereiches des Kraftfahrzeugs.

Gemäß einer Ausführungsform kann ein dem Sendebereich zugeordneter erster Bereich auf der reflektierenden Fläche des zumindest einen Umlenkspiegels eine erste Breite aufweisen und ein dem Empfangsbereich zugeordneter zweiter Bereich auf der reflektierenden Fläche des zumindest einen Umlenkspiegels eine im Vergleich zur ersten Breite vergrößerte zweite Breite aufweisen. Dabei kann es auch vorgesehen sein, dass die reflektierende Fläche im ersten Bereich trapezförmig und im zweiten Bereich rechteckförmig ausgestaltet ist. Der zweite Bereich weist dabei die zweite Breite auf, welche sich innerhalb des trapezförmigen ersten Bereiches eine die erste Breite verschmälert. Durch diese verringerte erste Breite im Bereich des Sendebereiches kann das Lichtschott besonders nahe an der reflektierenden Fläche angeordnet werden, ohne dabei eine Drehbewegung des zumindest einen Umlenkspiegels um die Drehachse zu beeinträchtigen beziehungsweise zu behindern.

Zur Erfindung gehört außerdem ein Kraftfahrzeug mit einer optischen Detektionsvorrichtung. Das Kraftfahrzeug ist insbesondere als ein Personenkraftwagen ausgestaltet. Das Kraftfahrzeug kann beispielsweise ein Fahrerassistenzsystem aufweisen, welches ein pilotiertes Fahren für das Kraftfahrzeug bereitstellt. Die für das pilotierte Fahren benötigten Umgebungsinformationen können anhand der Umgebungserfassung durch die Detektionsvorrichtung besonders genau bestimmt werden.

Die mit Bezug auf die erfindungsgemäße Haltevorrichtung vorgestellten bevorzugten Ausführungsformen und deren Vorteile gelten entsprechend für die erfindungsgemäße optische Detektionsvorrichtung sowie für das erfindungsgemäße Kraftfahrzeug.

Mit Angaben "oben", "unten", "vorne", "hinten", "horizontal", "vertikal", "radial", "innen", "außen", "Drehachse" (9), "Umlaufrichtung" (12), etc. sind die bei bestimmungsgemäßem Gebrauch und bestimmungsgemäßem Anordnen der Antriebseinheit und der Umlenkspiegel an der Haltevorrichtung und bei einem dann vor der optischen Detektionsvorrichtung stehenden und in Richtung der optischen Detektionsvorrichtung blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung einer Ausführungsform einer Umlenkspiegelanordnung einer erfindungsgemäßen optischen Detektionsvorrichtung; und
- Fig. 3: eine Explosionsdarstellung der in Fig. 2 gezeigten Umlenkspiegelanordnung.

In den Figuren sind gleiche sowie funktionsgleiche Elemente mit den gleichen Bezugszeichen versehen.

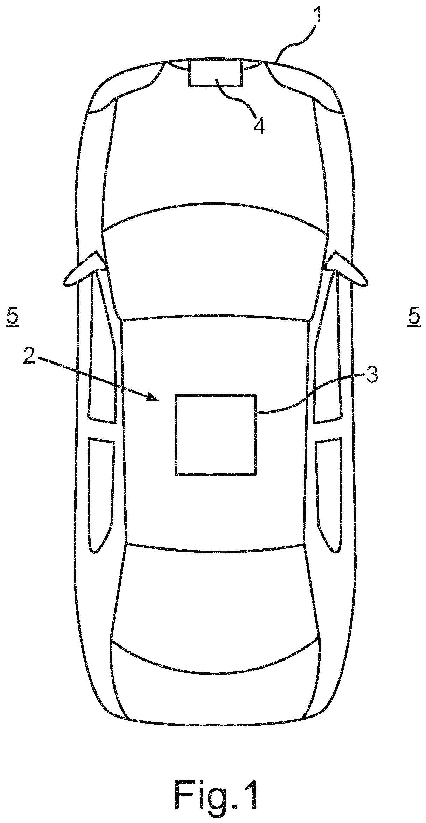

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 weist ein Fahrerassistenzsystem 2 auf, welches wiederum eine Steuereinrichtung 3, die beispielsweise durch ein elektronisches Steuergerät des Kraftfahrzeugs 1 gebildet sein kann, umfasst. Darüber hinaus umfasst das Fahrerassistenzsystem 2 zumindest eine optische Detektionsvorrichtung 4.

Die optische Detektionsvorrichtung 4 ist insbesondere als ein Laserscanner ausgestaltet. Bei der optischen Detektionsvorrichtung 4 wird zum Überwachen eines Umgebungsbereiches 5 des Kraftfahrzeugs 1 ein von einer Lichtquelle bereitgestelltes optisches Signal, insbesondere ein von einem Laser der Detektionsvorrichtung 4 bereitgestellter Laserstrahl, in den Umgebungsbereich 5 ausgesendet und das an einem Objekt in dem Umgebungsbereich 5 reflektierte Signal wieder empfangen. Informationen über das Objekt, beispielsweise ein Abstand des Objektes zu dem Kraftfahrzeug 1, können dem Fahrerassistenzsystem 2 bereitgestellt werden.

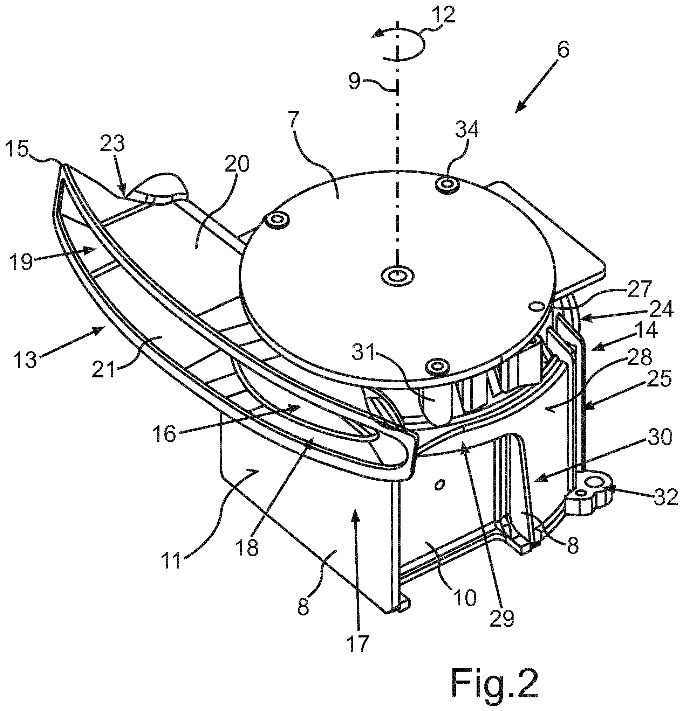

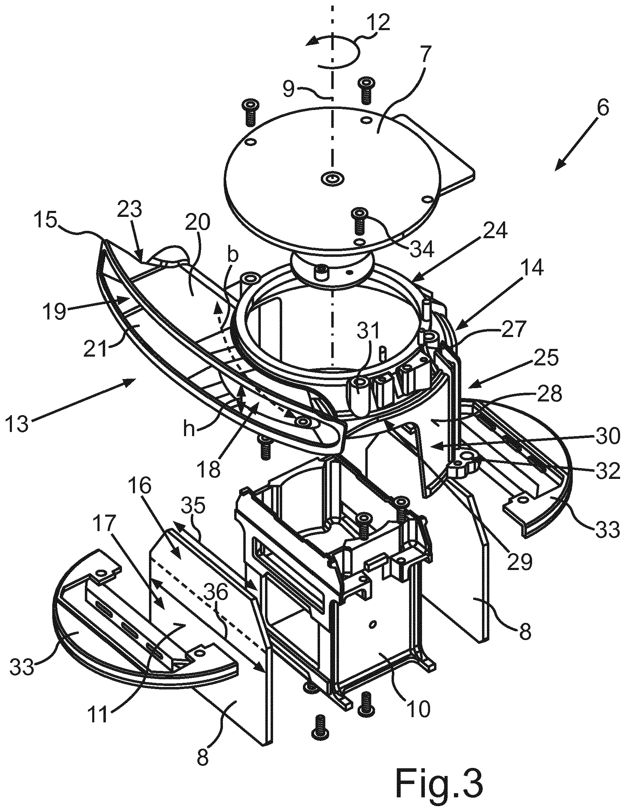

Zum Auslenken des Laserstrahls und damit zum Abscannen des Umgebungsbereiches 5 weist die optische Detektionsvorrichtung 4 eine Umlenkspiegelanordnung 6 auf, welche in Fig. 2 in einem zusammengebauten Zustand und in Fig. 3 in einer Explosionsdarstellung gezeigt ist. Die Umlenkspiegelanordnung 6 weist eine Antriebseinheit 7, beispielsweise in Form von einem Servomotor, auf. Die Antriebseinheit 7 ist zum Antreiben zumindest eines um eine Drehachse 9 drehbar gelagerten Umlenkspiegels 8 ausgebildet ist. Hier weist die Umlenkspiegelanordnung 6 zwei Umlenkspiegel 8 auf, welche an einer Trägereinrichtung 10, beispielsweise einer Trägerplatte, parallel beabstandet zueinander und gegenüberliegend angeordnet sind. Die drehbar gelagerten Umlenkspiegel 8 weisen jeweils eine geschlossene, durchgängige reflektierende Fläche 11 auf, an welcher der Laserstrahl beziehungsweise der Lichtstrahl in den Umgebungsbereich 5 oder auf eine hier nicht gezeigte Empfangseinrichtung der Detektionsvorrichtung 4 reflektiert werden kann. Die Trägereinrichtung 10 und damit die Umlenkspiegel 8 werden von der Antriebseinheit 7 um die Drehachse 9 rotiert. Dazu ist die Antriebseinheit 7 mit der Trägereinrichtung 10 gekoppelt. Die Umlenkspiegel 8 bewegen sich entlang einer Umlaufrichtung 12 um die Drehachse 9. Die Antriebseinheit 7 ist dabei in vertikaler Richtung entlang der Drehachse 9 betrachtet über den Umlenkspiegeln 8 angeordnet. Zwischen den Umlenkspiegeln 8 und der Antriebseinheit 7 kann dabei beispielsweise eine Abdeckeinrichtung 33 vorgesehen sein, welche in der Explosionsdarstellung gemäß Fig. 3 gezeigt ist.

Die Umlenkspiegelanordnung 6 weist außerdem eine Haltevorrichtung 13 auf, welche zum Halten der Antriebseinheit 7 ausgebildet ist. Die Haltevorrichtung 13 hat ein Halteteil 14, mit dem ein Lichtschott 15 einteilig ausgebildet ist. Das Lichtschott 15 wird beim Halten der Antriebseinheit 7 bereichsweise an der reflektierenden Fläche 11 eines der Umlenkspiegel 8 angeordnet und unterteilt somit die reflektierende Fläche 11 des Umlenkspiegels 8 in einen Sendebereich 16 und einen Empfangsbereich 17. Dabei weist ein dem Sendebereich 16 zugeordneter Bereich auf der reflektierenden Fläche 11 eine erste Breite 35 und ein dem Empfangsbereich 17 zugeordneter Bereich auf der reflektierenden Fläche 11 eine gegenüber der ersten Breite 35 größere zweite Breite 36 auf. Beim bestimmungsgemäßen Betrieb der Detektionsvorrichtung 4 wird dabei der Lichtstrahl auf den Sendebereich 16 geführt und von dem Sendebereich 16 in den Umgebungsbereich 5 reflektiert. Der Lichtstrahl wird dann an einem Objekt im Umgebungsbereich 5 zurück auf den Empfangsbereich 17 reflektiert und von dort auf beispielsweise an die Empfangseinrichtung der Detektionsvorrichtung 4 weitergeleitet. Die Haltevorrichtung 15 mit dem Halteteil 14 und dem Lichtschott 15 ist dabei ortsfest bezüglich der drehbar gelagerten Umlenkspiegel 8. Anders ausgedrückt, drehen sich die Umlenkspiegel 8 unter dem Lichtschott 15 weg, wodurch die reflektierenden Fläche 11 jeweils eines der Umlenkspiegel 8 nur zeitweise beziehungsweise temporär in den Sendebereich 16 und den Empfangsbereich 17 unterteilt wird. Dadurch dass der dem Sendebereich 16 zugeordnete Bereich die erste Breite 35 aufweist, kann das Lichtschott 15 besonders platzsparend und nahe an der reflektierenden Fläche 11 angeordnet werden, ohne dass eine Drehbewegung der Umlenkspiegel 8 gestört wird.

Das Lichtschott 15 ist hier in Form von einer Blende ausgebildet und weist vorzugsweise ein Öffnungsfenster 18 als eine Blendenöffnung auf. Das Öffnungsfenster 18 legt beim Anordnen des Lichtschottes 15 an der reflektierenden Fläche 11 des Umlenkspiegels 8 einen Bereich auf der reflektierenden Fläche 11 frei. Dieser freigelegte Bereich ist dabei der Sendebereich 16. Der an das Lichtschott 15 angrenzende Bereich, also der Bereich auf der reflektierenden Fläche 11, welcher nicht von dem Lichtschott 15 bedeckt ist, bildet dabei den Empfangsbereich 17 aus. Das Öffnungsfenster 18 ist dabei mit einer Breite b ausgebildet, durch welche die reflektierende Fläche 11 in horizontaler Richtung unterteilt wird. Der Sendebereich 16 liegt also in vertikaler Richtung über dem Empfangsbereich 17. Außerdem ist das Öffnungsfenster 18 mit einer Höhe h ausgebildet, welche höchstens einer halben Höhe der reflektierenden Fläche 11 entlang der Drehachse 9 entspricht. Dadurch wird ein im Vergleich zum Empfangsbereich 17 kleinerer, niedrigerer Sendebereich 16 ausgebildet. Beim bestimmungsgemäßen Betrieb der Detektionsvorrichtung 4 wird also der Lichtstrahl durch das Öffnungsfenster 18 hindurch auf den Sendebereich 16 geführt und von dem Sendebereich 16 zurück durch das Öffnungsfenster 18 in den Umgebungsbereich 5 reflektiert. Der Lichtstrahl wird dann an einem Objekt im Umgebungsbereich 5 auf den Empfangsbereich 17 außerhalb des Lichtschottes 15 reflektiert und von dort aus beispielsweise an die Empfangseinrichtung der Detektionsvorrichtung 4 weitergeleitet.

Außerdem weist das Lichtschott 15 eine Aufnahmeeinrichtung 19 auf, welche zum Halten der hier nicht gezeigten Lichtquelle, also des Lasers, und zum Führen des von der Lichtquelle bereitgestellten Lichtstrahls auf den Sendebereich 16 ausgebildet ist. Die Aufnahmeeinrichtung 19 des Lichtschottes 15 weist hier zwei parallel zueinander verlaufende, einen Aufnahmeschacht bildende Wände 20, 21 auf. Dabei wird der Laser an einem Schachteingang 23 der Aufnahmeeinrichtung 19 angeordnet und dort gehalten. Die Wände 20, 21 erstrecken sich dabei senkrecht zu der Drehachse 9, wobei die Wand 20 das Lichtschott 15 und damit den Sendebereich 16 nach oben hin begrenzt und die Wand 21 das Lichtschott 15 und damit den Sendebereich 16 nach unten hin begrenzt. Der Lichtstrahl wird dabei entlang der Wände 20, 21 zwischen den Wänden 20, 21 auf den Sendebereich 16 geführt. Angrenzend an die Wand 21 ist nach unten hin der Empfangsbereich 17 ausgebildet. Durch die Aufnahmeeinrichtung 19, insbesondere die Wände 20, 21 der Aufnahmeeinrichtung 19, ist der Sendebereich 16 von dem Empfangsbereich 17 separiert beziehungsweise optisch isoliert.

Das Halteteil 14 weist ein erstes Aufnahmeteil 24 und ein zweites Aufnahmeteil 25 auf. Die Aufnahmeteile 24, 25 sind in vertikaler Richtung entlang der Drehachse 9 übereinander und fluchtend zueinander angeordnet, wobei die Drehachse 9 innerhalb des ersten Aufnahmeteils 24 und des zweiten Aufnahmeteils 25 verläuft. Die Aufnahmeteile 24, 25 sind hier hohlzylinderförmig ausgebildet. Das erste Aufnahmeteil 24 dient zum Aufnehmen der Antriebseinheit 7 der Umlenkspiegelanordnung 6. Das erste Aufnahmeteil 24 weist dabei eine entlang der Umlaufrichtung 12 verlaufende Seitenwand 27 auf, welche direkt an das Lichtschott 15 angrenzt.

An das erste Aufnahmeteil 24 angrenzend ist das zweite Aufnahmeteil 25 ausgebildet, welches eine in Umlaufrichtung 12 bereichsweise aufgebrochene Seitenwand 28 aufweist. Das zweite Aufnahmeteil 25 dient zum Aufnehmen der Trägereinrichtung 10 mit den Umlenkspiegeln 8. Dabei ist in einem ersten Bereich 29 des zweiten Aufnahmeteils 25 die Seitenwand 28 um die Drehachse 9 verlaufend und direkt an das Lichtschott 15 angrenzend ausgebildet und in einem zweiten Bereich 30 des zweiten Aufnahmeteils 25 aufgebrochen und teilweise umlaufend ausgebildet. Die Seitenwand 28 umläuft also in dem zweiten Bereich 30 die Drehachse 9 halbkreisförmig. In dem zweiten Bereich 30 ist die Seitenwand 28 des zweiten Aufnahmeteils 25 entlang der Drehachse 9 mit den Umlenkspiegeln 8 vollständig überlappend und entlang der Umlaufrichtung 12 bereichsweise überlappend ausgebildet. Die Seitenwand 28 dient zum Überdecken der reflektierenden Fläche 11 eines der Umlenkspiegels 8. Das Lichtschott 15 ist dabei auf einer ersten Seite der Aufnahmeteile 24, 25 ausgebildet und die im zweiten Bereich 30 halbzylinderförmig verlaufende Seitenwand 28 an einer der ersten Seite gegenüberliegenden zweiten Seite der Aufnahmeteile 24, 25 ausgebildet. Somit wird beim Drehen der Umlenkspiegel 8 die reflektierende Fläche 11 eines der Umlenkspiegel 8 durch das Lichtschott 15 in den Sendebereich 16 und den Empfangsbereich 17 unterteilt und die reflektierende Fläche 11 des anderen Umlenkspiegels 8 von der Seitenwand 28 des zweiten Bereiches 30 des zweiten Aufnahmeteils 25 überdeckt. Die das Lichtschott 15 aufweisende erste Seite des Halteteils 14 bildet dabei in einer bestimmungsgemäßen Einbaulage der Detektionsvorrichtung 4 eine dem Umgebungsbereich 5 zugewandte Frontseite der Detektionsvorrichtung 4 aus und die gegenüberliegende, die halbzylinderförmig verlaufende Seitenwand 28 aufweisende zweite Seite, eine dem Umgebungsbereich 5 abgewandte Rückseite der Detektionsvorrichtung 4 aus.

Das Lichtschott 15, insbesondere die Wände 20, 21 der Aufnahmeeinrichtung 15, ist dabei zumindest bereichsweise mit einer Form ausgebildet, welche der Form der Seitenwände 27, 28 folgt. Da die Seitenwände 27, 28 hier konvex gewölbt sind, ist in den Wänden 20, 21 eine konkave Wölbung beziehungsweise Aussparung ausgebildet, durch welche sich die Wände 20, 21 an die Seitenwände 27, 28 anschmiegen beziehungsweise anschließen. Das Öffnungsfenster 18 ist hier in der Seitenwand 27 des ersten Aufnahmeteils 24 und in der Seitenwand 28 des ersten Bereiches 29 des zweiten Aufnahmeteils 25 ausgebildet.

Außerdem sind an der Haltevorrichtung 13 Befestigungselemente 31, 32 ausgebildet, welche beispielsweise als Gewinde für Schrauben 34 ausgebildet sein können. An den Befestigungselementen 31, welche hier in der Seitenwand 27 und damit einteilig mit dem Halteteil 14 ausgebildet sind, kann beispielsweise die Antriebseinheit 7 mittels der Schrauben 34 befestigt werden. Über das Befestigungselement 32 kann die Umlenkspiegeleinrichtung 6 in einem Gehäuse für die Umlenkspiegelanordnung 6 beziehungsweise die Detektionsvorrichtung 4 befestigt werden.

## Patentansprüche

1. Haltevorrichtung (13) zum Halten einer Antriebseinheit (7) einer Umlenkspiegelanordnung (6) einer optischen Detektionsvorrichtung (4) für ein Kraftfahrzeug (1),
**dadurch gekennzeichnet, dass**
die Haltevorrichtung (13) ein Halteteil (14) aufweist, mit dem ein Lichtschott (15) einteilig ausgebildet ist, wobei das Lichtschott (15) beim bestimmungsgemäßen Halten der Antriebseinheit (7) durch die Haltevorrichtung (13) zum Unterteilen einer reflektierenden Fläche (11) zumindest eines, an einer Drehachse (9) drehbar gelagerten Umlenkspiegels (8) der Umlenkspiegelanordnung (6) in einen Sendebereich (16) und einen Empfangsbereich (17) bereichsweise an der reflektierenden Fläche (11) angeordnet ist und wobei die Haltevorrichtung (13) mit dem Halteteil (14) und dem Lichtschott (15) ortsfest bezüglich des zumindest einen drehbar gelagerten Umlenkspiegels (8) ist.

2. Haltevorrichtung (13) nach Anspruch 1,
**dadurch gekennzeichnet, dass**
das Lichtschott (15) ein Öffnungsfenster (18) aufweist, durch welches beim Anordnen des Lichtschottes (15) an der reflektierenden Fläche (11) ein Bereich der reflektierenden Fläche (11) freigelegt wird, wobei der Sendebereich (16) durch den durch das Öffnungsfenster (18) freigelegten Bereich ausgebildet ist und der Empfangsbereich (17) als ein an das Lichtschott (15) angrenzender Bereich der reflektierenden Fläche (11) ausgebildet ist.

3. Haltevorrichtung (13) nach Anspruch 2,
**dadurch gekennzeichnet, dass**
das Öffnungsfenster (18) mit einer Breite (b) ausgebildet ist, welche zumindest einer Breite (35, 36) der reflektierenden Fläche (11) entspricht, und das Lichtschott (15) zum horizontalen Unterteilen der reflektierenden Fläche (11) in den Sendebereich (16) und den Empfangsbereich (17) entlang einer in vertikale Richtung orientierten Drehachse (9) der Umlenkspiegelanordnung (6) ausgebildet ist.

4. Haltevorrichtung (13) nach Anspruch 2 oder 3,
**dadurch gekennzeichnet, dass**
das Öffnungsfenster (18) mit einer Höhe (h) ausgebildet ist, welche kleiner als eine halbe Höhe der reflektierenden Fläche (11) ist, und das Lichtschott (15) zum Unterteilen der reflektierenden Fläche (11) in einen gegenüber dem Sendebereich (16) größeren Empfangsbereich (17) ausgebildet ist.

5. Haltevorrichtung (13) nach einem der vorhergehenden Ansprüche,
**dadurch gekennzeichnet, dass**
das Lichtschott (15) eine Aufnahmeeinrichtung (19) zum Aufnehmen einer Lichtquelle und zum Leiten des von der Lichtquelle bereitgestellten Lichtes auf den Sendebereich (16) der reflektierenden Fläche (11) aufweist.

6. Haltevorrichtung (13) nach Anspruch 6,
**dadurch gekennzeichnet, dass**
die Aufnahmeeinrichtung (19) zwei parallel zueinander verlaufende, einen Aufnahmeschacht bildende Wände (20, 21) aufweist, welche an einer zu der Drehachse (9) parallel verlaufenden Seitenwand (27, 28) der Haltevorrichtung (13) senkrecht zu der Drehachse (9) orientiert angeordnet sind.

7. Haltevorrichtung (13) nach einem der vorhergehenden Ansprüche,
**dadurch gekennzeichnet, dass**
das Halteteil (14) ein erstes Aufnahmeteil (24) zum Aufnehmen der Antriebseinheit (7) und ein zweites Aufnahmeteil (25) zum Aufnehmen des zumindest einen Umlenkspiegels (8) aufweist, wobei die Drehachse (9) innerhalb des ersten und des zweiten Aufnahmeteils (24, 25) angeordnet ist und das erste und das zweite Aufnahmeteil (24, 25) entlang der Drehachse (9) angrenzend aneinander ausgebildet sind.

8. Haltevorrichtung (13) nach Anspruch 7,
**dadurch gekennzeichnet, dass**
das erste und das zweite Aufnahmeteil (24, 25) hohlzylinderförmig ausgebildet sind, wobei eine Seitenwand (27) des ersten Aufnahmeteils (24) entlang einer um die Drehachse (9) orientierten Umlaufrichtung (12) verlaufend an das Lichtschott (15) direkt angrenzend ausgebildet ist und eine Seitenwand (28) des zweiten Aufnahmeteils (25) entlang der Drehachse (9) einen ersten, entlang der Umlaufrichtung (12) verlaufenden und direkt an das Lichtschott (15) angrenzenden Bereich (29) aufweist und einen entlang der Umlaufrichtung (12) zweiten aufgebrochenen Bereich (30) zum Überdecken der reflektierenden Fläche (11) des zumindest einen Umlenkspiegels (8) aufweist.

9. Haltevorrichtung (13) nach Anspruch 8,
**dadurch gekennzeichnet, dass**
das Lichtschott (15) an einer ersten Seite der Aufnahmeteile (24, 25) ausgebildet ist und an einer der ersten Seite gegenüberliegenden zweiten Seite der Aufnahmeteile (24, 25) der aufgebrochene zweite Bereich (30) der Seitenwand (28) des zweiten Aufnahmeteils (25) ausgebildet ist.

10. Haltevorrichtung (13) nach Anspruch 8 oder 9,
**dadurch gekennzeichnet, dass**
eine Form des Lichtschottes (15) entlang einer Umlaufrichtung (26) zumindest bereichsweise komplementär zu einer Form der Seitenwände (27, 28) der Aufnahmeteile (24, 25) ausgebildet ist und somit einem Verlauf der Seitenwände (27, 28) folgend an den Seitenwänden (27, 28) ausgebildet ist.

11. Haltevorrichtung (13) nach einem der vorhergehenden Ansprüche,
**dadurch gekennzeichnet, dass**
an Seitenwänden (27, 28) der Haltevorrichtung (13) zumindest ein Befestigungselement (31, 32) zum Befestigen der Antriebseinheit (7) und/oder der Umlenkspiegel (8) und/oder zum Befestigen der Umlenkspiegelanordnung (6) in einem Gehäuse ausgebildet ist.

12. Haltevorrichtung (13) nach einem der vorhergehenden Ansprüche,
**dadurch gekennzeichnet, dass**
die Haltevorrichtung (13) aus einem Leichtmetall oder einem Kunststoff gebildet ist.

13. Optische Detektionsvorrichtung (4), insbesondere Laserscanner, für ein Kraftfahrzeug (1) mit einer Umlenkspiegelanordnung (6) mit einer Antriebseinheit (7) zum Antreiben zumindest eines, an einer Drehachse (9) drehbar gelagerten Umlenkspiegels (8) der Umlenkspiegelanordnung (6) und mit einer Haltevorrichtung (13) nach einem der vorhergehenden Ansprüche.

14. Optische Detektionsvorrichtung (4) nach Anspruch 13,
ein dem Sendebereich (16) zugeordneter erster Bereich auf einer reflektierenden Fläche (11) des zumindest einen Umlenkspiegels (8) eine erste Breite (35) aufweist und ein dem Empfangsbereich (17) zugeordneter zweiter Bereich auf der reflektierenden Fläche (11) des zumindest einen Umlenkspiegels (8) eine im Vergleich zur ersten Breite (35) vergrößerte zweite Breite (36) aufweist.

15. Kraftfahrzeug (1) mit einer optischen Detektionsvorrichtung (4) nach Anspruch 13 oder 14.

## Claims

1. Holding apparatus (13) for holding a drive unit (7) of a deviating mirror arrangement (6) of an optical detection apparatus (4) for a motor vehicle (1), **characterized in that**
the holding apparatus (13) comprises a holding part (14), with which a light barrier (15) is formed in one piece, the light barrier (15) being arranged, when the drive unit (7) is being held as intended by the holding apparatus (13), to subdivide a reflective surface (11) of at least one deviating mirror (8), mounted rotatably on a rotation axle (9), of the deviating mirror arrangement (6) into an emission region (16) and a reception region (17) locally on the reflective surface (11) and the holding apparatus (13) having the holding part (14) and the light barrier (15) being static with respect to the at least one rotatably mounted deviating mirror (8).

2. Holding apparatus (13) according to Claim 1, **characterized in that**
the light barrier (15) comprises an aperture window (18) by which a region of the reflective surface (11) is exposed when the light barrier (15) is arranged on the reflective surface (11), the emission region (16) being formed by the region exposed by the aperture window (18) and the reception region (17) being formed as a region of the reflective surface (11) adjacent to the light barrier (15).

3. Holding apparatus (13) according to Claim 2, **characterized in that**
the aperture window (18) is formed with a width (b) which corresponds at least to a width (35, 36) of the reflective surface (11), and the light barrier (15) is configured for horizontal subdivision of the reflective surface (11) into the emission region (16) and the reception region (17) along a rotation axle (9), oriented in vertical direction, of the deviating mirror arrangement (6).

4. Holding apparatus (13) according to Claim 2 or 3, **characterized in that**
the aperture window (18) is formed with a height (h) which is less than half the height of the reflective surface (11), and the light barrier (15) is configured for subdivision of the reflective surface (11) into a reception region (17) which is larger than the emission region (16).

5. Holding apparatus (13) according to one of the preceding claims,
**characterized in that**
the light barrier (15) has a reception device (19) for receiving a light source and for guiding the light provided by the light source onto the emission region (16) of the reflective surface (11) .

6. Holding apparatus (13) according to Claim 6, **characterized in that**
the reception device (19) comprises two walls (20, 21), which extend parallel to one another, form a reception shaft, and are arranged oriented perpendicularly to the rotation axle (9) on a side wall (27, 28), extending parallel to the rotation axle (9), of the holding apparatus (13).

7. Holding apparatus (13) according to one of the preceding claims,
**characterized in that**
the holding part (14) comprises a first reception part (24) for receiving the drive unit (7) and a second reception part (25) for receiving the at least one deviating mirror (8), the rotation axle (9) being arranged inside the first and second reception parts (24, 25), and the first and second reception parts (24, 25) being formed adjacent to one another along the rotation axle (9).

8. Holding apparatus (13) according to Claim 7, **characterized in that**
the first and second reception parts (24, 25) are configured in the shape of a hollow cylinder, a side wall (27) of the first reception part (24) being formed directly adjacent to the light barrier (15) along a circumferential direction (12) oriented around the rotation axle (9), and a side wall (28) of the second reception part (25) comprising along the rotation axle (9) a first region (29) extending along the circumferential direction (12) and directly adjacent to the light barrier (15) and a second region (30), interrupted along the circumferential direction (12), for covering the reflective surface (11) of the at least one deviating mirror (8).

9. Holding apparatus (13) according to Claim 8, **characterized in that**
the light barrier (15) is formed on a first side of the reception parts (24, 25), and the interrupted second region (30) of the side wall (28) of the second reception part (25) is formed on a second side, lying opposite the first side, of the reception parts (24, 25).

10. Holding apparatus (13) according to Claim 8 or 9, **characterized in that**
a shape of the light barrier (15) along a circumferential direction (26) is at least locally configured complementarily with a shape of the side walls (27, 28) of the reception parts (24, 25), and is thus formed on the side walls (27, 28) so as to follow a profile of the side walls (27, 28).

11. Holding apparatus (13) according to one of the preceding claims,
**characterized in that**
at least one fastening element (31, 32) for fastening the drive unit (7) and/or the deviating mirror (8), and/or for fastening the deviating mirror arrangement (6) in a housing is formed on side walls (27, 28) of the holding apparatus (13).

12. Holding apparatus (13) according to one of the preceding claims,
**characterized in that**
the holding apparatus (13) is formed from a light metal or a plastic.

13. Optical detection apparatus (4), in particular laser scanner, for a motor vehicle (1), having a deviating mirror arrangement (6) with a drive unit (7) for driving at least one deviating mirror (8), mounted rotatably on a rotation axle (9), of the deviating mirror arrangement (6), and having a holding apparatus (13) according to one of the preceding claims.

14. Optical detection apparatus (4) according to Claim 13,
a first region assigned to the emission region (16) on a reflective surface (11) of the at least one deviating mirror (8) has a first width (35), and a second region assigned to the reception region (17) on the reflective surface (11) of the at least one deviating mirror (8) has a second width (36), which is enlarged in comparison with the first width (35) .

15. Motor vehicle (1) having an optical detection apparatus (4) according to Claim 13 or 14.

## Revendications

1. Dispositif de retenue (13) destiné à retenir une unité d'entraînement (7) d'un ensemble de miroir déflecteur (6) d'un dispositif de détection optique (4) pour un véhicule à moteur (1), **caractérisé en ce que** le dispositif de retenue (13) présente une partie de retenue (14), avec laquelle une cloison lumineuse (15) est formée d'une pièce, dans lequel, lorsque l'unité d'entraînement (7) est correctement retenue par le dispositif de retenue (13), la cloison lumineuse (15) est disposée de façon à diviser une face réfléchissante (11) d'au moins un miroir déflecteur (8) de l'ensemble de miroir déflecteur (6) monté de façon rotative sur un axe de rotation (9) en une zone d'émission (16) et une zone de réception (17) localement sur la face réfléchissante (11) et dans lequel le dispositif de retenue (13) avec la partie de retenue (14) et la cloison lumineuse (15) est stationnaire par rapport audit au moins un miroir déflecteur monté de façon rotative (8).

2. Dispositif de retenue (13) selon la revendication 1, **caractérisé en ce que** la cloison lumineuse (15) présente une fenêtre d'ouverture (18), par laquelle une zone de la face réfléchissante (11) est libérée lors de l'agencement de la cloison lumineuse (15) sur la face réfléchissante (11), dans lequel la zone d'émission (16) est formée par la zone libérée par la fenêtre d'ouverture (18) et la zone de réception (17) est formée par une zone de la face réfléchissante (11) adjacente à la cloison lumineuse (15).

3. Dispositif de retenue (13) selon la revendication 2, **caractérisé en ce que** la fenêtre d'ouverture (18) est formée avec une largeur (b), qui correspond au moins à une largeur (35, 36) de la face réfléchissante (11), et la cloison lumineuse (15) est formée le long d'un axe de rotation (9) de l'ensemble de miroir déflecteur (6) orienté en direction verticale pour le partage horizontal de la face réfléchissante (11) en ladite zone d'émission (16) et ladite zone de réception (17).

4. Dispositif de retenue (13) selon une revendication 2 ou 3, **caractérisé en ce que** la fenêtre d'ouverture (18) est formée avec une hauteur (h), qui est inférieure à la moitié de la hauteur de la face réfléchissante (11) et la cloison lumineuse (15) est formée pour partager la face réfléchissante (11) en une zone de réception (17) plus grande que la zone d'émission (16).

5. Dispositif de retenue (13) selon l'une quelconque des revendications précédentes, **caractérisé en ce que** la cloison lumineuse (15) présente un dispositif de logement (19) destiné à recevoir une source de lumière et à conduire la lumière produite par la source de lumière sur la zone d'émission (16) de la face réfléchissante (11).

6. Dispositif de retenue (13) selon la revendication 6, **caractérisé en ce que** le dispositif de logement (19) présente deux parois (20, 21) s'étendant parallèlement l'une à l'autre et formant un puits de réception, qui sont disposées de façon orientée perpendiculairement à l'axe de rotation (9) sur une paroi latérale (27, 28) du dispositif de retenue (13) qui s'étend parallèlement à l'axe de rotation (9).

7. Dispositif de retenue (13) selon l'une quelconque des revendications précédentes, **caractérisé en ce que** la partie de retenue (14) présente une première partie de logement (24) destinée à recevoir l'unité d'entraînement (7) et une seconde partie de logement (25) destinée à recevoir ledit au moins un miroir déflecteur (8), dans lequel l'axe de rotation (9) est disposé à l'intérieur de la première et de la seconde parties de retenue (24, 25) et la première et la seconde parties de retenue (24, 25) sont formées de façon adjacente l'une à l'autre le long de l'axe de rotation (9).

8. Dispositif de retenue (13) selon la revendication 7, **caractérisé en ce que** la première et la seconde parties de logement (24, 25) sont de forme cylindrique creuse, dans lequel une paroi latérale (27) de la première partie de logement (24) est formée de façon directement adjacente à la cloison lumineuse (15) en s'étendant le long d'une direction périphérique (12) orientée autour de l'axe de rotation (9) et une paroi latérale (28) de la seconde partie de logement (25) présente le long de l'axe de rotation (9) une première zone (29) s'étendant le long de la direction périphérique (12) et directement adjacente à la cloison lumineuse (15) et une seconde zone (30) interrompue le long de la direction périphérique (12) destinée à recouvrir la face réfléchissante (11) dudit au moins un miroir déflecteur (8).

9. Dispositif de retenue (13) selon la revendication 8, **caractérisé en ce que** la cloison lumineuse (15) est formée sur un premier côté des parties de logement (24, 25) et la seconde zone interrompue (30) de la paroi latérale (28) de la seconde partie de logement (25) est formée sur un second côté des parties de logement (24, 25) opposé au premier côté.

10. Dispositif de retenue (13) selon une revendication 8 ou 9, **caractérisé en ce qu'**une forme de la cloison lumineuse (15) est formée le long d'une direction périphérique (26) de façon au moins localement complémentaire à une forme des parois latérales (27, 28) des parties de logement (24, 25) et est ainsi formée sur les parois latérales (27, 28) en suivant un tracé des parois latérales (27, 28).

11. Dispositif de retenue (13) selon l'une quelconque des revendications précédentes, **caractérisé en ce qu'**au moins un élément de fixation (31, 32) destiné à fixer l'unité d'entraînement (7) et/ou les miroirs déflecteurs (8) et/ou à fixer l'ensemble de miroir déflecteur (6) dans un boîtier est formé sur des parois latérales (27, 28) du dispositif de retenue (13).

12. Dispositif de retenue (13) selon l'une quelconque des revendications précédentes, **caractérisé en ce que** le dispositif de retenue (13) est formé en un métal léger ou en une matière plastique.

13. Dispositif de détection optique (4), en particulier scanneur à laser, pour un véhicule à moteur (1) avec un ensemble de miroir déflecteur (6) muni d'une unité d'entraînement (7) pour l'entraînement d'au moins un miroir déflecteur (8) de l'ensemble de miroir déflecteur (6) monté de façon rotative autour d'un axe de rotation (9) et avec un dispositif de retenue (13) selon l'une quelconque des revendications précédentes.

14. Dispositif de détection optique (4) selon la revendication 13, une première zone attribuée à la zone d'émission (16) présente sur une face réfléchissante (11) dudit au moins un miroir déflecteur (8) une première largeur (35) et une seconde zone attribuée à la zone de réception (17) présente sur la face réfléchissante (11) dudit au moins un miroir déflecteur (8) une seconde largeur (36) augmentée par comparaison avec la première largeur (35).

15. Véhicule (1) muni d'un dispositif de détection optique (4) selon une revendication 13 ou 14.
